(19) **Europäisches Patentamt**
**European Patent Office**
**Office européen des brevets**

(11) **EP 4 775 606 A1**

(12) **EUROPEAN PATENT APPLICATION**
published in accordance with Art. 153(4) EPC

(43) Date of publication:
**15.07.2026 Bulletin 2026/29**

(21) Application number: **24862894.3**

(22) Date of filing: **06.09.2024**

(51) International Patent Classification (IPC):
**C08F 279/02** (2006.01)   **C08F 2/22** (2006.01)
**C08J 5/02** (2006.01)

(52) Cooperative Patent Classification (CPC):
**C08F 2/22; C08F 279/02; C08J 5/02**

(86) International application number:
**PCT/JP2024/031979**

(87) International publication number:
**WO 2025/053245 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146315**

(71) Applicant: **Resonac Corporation**
**Tokyo 105-7325 (JP)**

(72) Inventors:
• **TANABE Naoko**
**Tokyo 105-7325 (JP)**
• **OGAWA Noriko**
**Tokyo 105-7325 (JP)**
• **OHGUMA Yuya**
**Tokyo 105-7325 (JP)**

(74) Representative: **Strehl & Partner mbB**
**Maximilianstrasse 54**
**80538 München (DE)**

(54) **PRODUCTION METHOD FOR CHLOROPRENE SEED POLYMER COMPOSITION AND PRODUCTION METHOD FOR RUBBER IMMERSION PRODUCT**

(57)    An embodiment of the present invention relates to a method for producing a chloroprene seed polymerization product composition. The production method is a method for producing a chloroprene seed polymerization product composition, including a first polymerization step and a second polymerization step, the first polymerization step being a step of performing emulsion radical polymerization of at least a chloroprene monomer to obtain a chloroprene polymer, the second polymerization step being a step of performing emulsion seed polymerization of at least a specific monomer (B-1) or (B-2) with the chloroprene polymer, at 3 to 20 parts by mass per 100 parts by mass of a total of the chloroprene polymer and the monomer (B-1) or (B-2).

EP 4 775 606 A1

**Description**

**Technical Field**

An embodiment of the present invention relates to a method for producing a chloroprene seed polymerization product composition, or a method for producing a rubber dipped product.

**Background Art**

Materials including chloroprene (2-chloro-1,3-butadiene)-based polymer latex have good properties such as general rubber physical properties, weather resistance, heat resistance and chemical resistance, and have been widely used for, for example, dipped applications such as gloves, adhesive/pressure-sensitive adhesive applications, and civil engineering/building applications such as elastic asphalt (modified asphalt) and elastic cement.

In the application of medical disposable gloves, in particular, surgical gloves, a shock symptom caused by natural rubber allergies (anaphylaxis) is a serious problem in terms of health and life security of patients and medical technicians. To solve the problem, chloroprene rubber (hereinafter, also referred to as "CR") which is similar in flexibility and mechanical properties to natural rubber and relatively inexpensive is used as a material for surgical gloves. Specifically, the chloroprene rubber has an advantage that it is similar in sense of fit (comfortableness) to natural rubber and excellent in respondence (followability) to delicate movements of fingers.

A method has been proposed in which chloroprene-based polymer latex is used for surgical gloves to improve their flexibility (for example, Patent Literature 1 and Patent Literature 2).

However, for conventional chloroprene rubber, it is essential to use a vulcanization accelerator for obtaining vulcanized rubber having desired strength because the structure of the polymer contained in chloroprene-based polymer latex is incomplete. In recent years, even synthetic rubber gloves have caused contact dermatitis, which is ascribable to a vulcanization accelerator used during molding of chloroprene-based polymer latex, and is called type IV hypersensitivity. For this reason, demand for gloves free of a vulcanization accelerator which is an allergen for type IV hypersensitivity has increased.

To respond to the demand, a rubber composition including chloroprene-based polymer latex that can be crosslinked into chloroprene rubber suitable for applications such as surgical gloves without use of a vulcanization accelerator has been proposed (for example, Patent Literature 3).

**Citation List**

**Patent Literature**

Patent Literature 1: JP2007-106994A
Patent Literature 2: JP2009-501833A
Patent Literature 3: WO2016/166998

**Summary of Invention**

**Technical Problem**

In the case of Patent Literature 1, the use of a vulcanization accelerator is essential, and the problem of type IV hypersensitivity cannot be solved.

In the case of Patent Literature 2, there is a problem about the mechanical properties of rubber, where if the solid content concentration is low, it becomes difficult to form a film, and if the solid content concentration is high, the storage stability of compounds is deteriorated storage stability, aggregation is likely to occur, the product appearance is impaired.

In the case of Patent Literature 3, the mechanical properties of rubber are improved by adjusting the amount of tetrahydrofuran insoluble content in chloroprene-based polymer latex, but solutions to improve the physical properties of chloroprene rubber without use of a vulcanization accelerator are limited.

The present invention has been made in view of the above circumstances, and an object of the present invention is to provide a method for producing a chloroprene polymer composition capable of forming a molded article excellent in strength and rubber elasticity.

**Solution to Problem**

The present inventors have conducted intensive studies for solving the problems, and resultantly found that the problems can be solved by a molded product obtained from a composition including chloroprene seed polymerization product latex (chloroprene seed polymerization product composition), which is obtained by a specific production method.

That is, the configuration examples of the present invention are as in the following [1] to [7].

[1] A method for producing a chloroprene seed polymerization product composition, including a first polymerization step and a second polymerization step,

the first polymerization step being a step of performing emulsion radical polymerization of at least a chloroprene monomer to obtain a chloroprene polymer,

the second polymerization step being a step of performing emulsion seed polymerization of at least a monomer (B-2), whose homopolymer has a glass transition temperature or melting point of 30°C or higher, with the chloroprene polymer, at 3 to 20 parts by mass per 100 parts by mass of a total of the chloroprene polymer and the monomer (B-2).

[2] A method for producing a chloroprene seed polymerization product composition, including a first polymerization step and a second polymerization step,

the first polymerization step being a step of performing emulsion radical polymerization of at least a chloroprene monomer to obtain a chloroprene polymer,

the second polymerization step being a step of performing emulsion seed polymerization of at least a (meth) acrylate monomer (B-1), which has an alkyl group having 1 to 4 carbon atoms and in which the number of carbon atoms in a straight chain of the alkyl group is 3 or less, with the chloroprene polymer, at 3 to 20 parts by mass per 100 parts by mass of a total of the chloroprene polymer and the monomer (B-1).

[3] The method for producing a chloroprene seed polymerization product composition according to [1], wherein the monomer (B-2) is ethyl methacrylate, methyl methacrylate, isobutyl methacrylate, tert-butyl methacrylate, or 2,3-dichloro-1,3-butadiene.

[4] The method for producing a chloroprene seed polymerization product composition according to [2], wherein the monomer (B-1) is ethyl methacrylate, methyl methacrylate, isobutyl methacrylate, or tert-butyl methacrylate.

[5] A method for producing a rubber dipped product, including using a chloroprene seed polymerization product composition obtained by the production method according to any one of [1] to [4].

[6] The method for producing a rubber dipped product according to [5], wherein the rubber dipped product is gloves.

[7] The method for producing a rubber dipped product according to [6], wherein the gloves are medical disposable gloves.

**Advantageous Effects of Invention**

According to an embodiment of the present invention, chloroprene seed polymerization product latex having a specific structure is obtained, and a molded article obtained from a composition including the polymer latex is excellent in strength and rubber elasticity.

A composition obtained by a production method according to an embodiment of the present invention can sufficiently exhibit the effect without containing a vulcanization accelerator which causes type IV hypersensitivity. Therefore, the composition can be preferably used for molded products required not to cause type IV hypersensitivity, for example, dipped products such as gloves, blood-pressure meter bladders and rubber threads.

**Description of Embodiments**

Hereinafter, matters related to embodiments will be described in detail. In the statements herein, the numerical range indicated with "to" means that numerical values described before and after "to" are included as a lower limit and an upper limit.

Hereinafter, a method for producing a chloroprene seed polymerization product composition and a method for producing a rubber dipped product according to an embodiment of the present invention will be described in detail. The present embodiment shows an example of the present invention, and the present invention is not limited to the present embodiment. Various changes or modifications can be made to the present embodiment, and the present invention can include forms obtained by making such changes or modifications.

<<Method for producing chloroprene seed polymerization product composition>>

A method for producing a chloroprene seed polymerization product composition according to an embodiment of the present invention includes a first polymerization step to obtain chloroprene polymer latex, and a second polymerization step to obtain chloroprene seed polymerization product latex.

In general, "latex" is a hydrophobic substance emulsified with an emulsifier and dispersed as particles in water. The chloroprene polymer latex or chloroprene seed polymerization product latex in the present embodiment is particles of a chloroprene polymer or a chloroprene seed polymerization product dispersed in water.

<First polymerization step>

The first polymerization step is a step of performing emulsion radical polymerization of at least a chloroprene monomer (hereinafter, also referred to as a "monomer (A-1)") to synthesize a chloroprene polymer. This provides chloroprene polymer latex in which particles of the chloroprene polymer are dispersed in water. In the first polymerization step, a monomer (A-2) may be used with the monomer (A-1).

The chloroprene polymer may be a homopolymer of the monomer (A-1), or a copolymer of the monomer (A-1) and the monomer (A-2).

The monomer (A-2) is not particularly limited as long as it can be copolymerized with, for example, chloroprene (2-chloro-1,3-butadiene), and examples thereof include 2,3-dichloro-1,3-butadiene, 1-chloro-1,3-butadiene, 1,3-butadiene, isoprene, styrene, methacrylic acid, acrylic acid, itaconic acid, 2-ethylhexyl methacrylate, and butyl acrylate, with 2,3-dichloro-1,3-butadiene, 1-chloro-1,3-butadiene, 1,3-butadiene, methacrylic acid and acrylic acid being preferable.

One of the monomers (A-2) may be used singly, or two or more thereof may be used in combination.

When the monomer (A-2) is used, the proportions of the amounts of the monomer (A-1) and the monomer (A-2) used are not particularly limited. When the total amount of the monomer (A-1) and the monomer (A-2) used is defined as 100 mass%, the proportion of the monomer (A-1) is preferably 70 to 99.9 mass%, and more preferably 90 to 99 mass%, and the proportion or the monomer (A-2) is preferably 0.1 to 30 mass%, and more preferably 1 to 10 mass%.

Specifically, the chloroprene polymer can be synthesized by adding a polymerization initiator to an aqueous emulsion obtained by adding an emulsifier and water to the monomer (A-1) and the monomer (A-2) if necessary, to initiate a radical polymerization reaction.

Examples of the emulsifier in the first polymerization step include anionic emulsifiers and nonionic emulsifiers.

Specific examples of the anionic emulsifier include alkali metal salts of disproportionated rosin acid; dodecylbenzenesulfonates such as sodium dodecylbenzenesulfonate and triethanolamine dodecylbenzenesulfonate; diphenylethersulfonates such as sodium diphenylethersulfonate and ammonium diphenylethersulfonate; naphthalenesulfonates such as sodium salts of $\beta$-naphthalenesulfonic acid formaldehyde condensates; and fatty acid alkali metal salts such as potassium laurate.

Specific examples of the nonionic emulsifier include partially saponified polyvinyl alcohol, polyoxyethylene nonylphenyl ether, polyoxyethylene octylphenyl ether, and polyoxyethylene lauryl ether.

The emulsifier in the first polymerization step is preferably an anionic emulsifier, and more preferably an alkali metal salt (sodium salt or potassium salt) of disproportionated rosin acid, or a naphthalenesulfate.

One of the emulsifiers may be used singly, or two or more thereof may be used in combination.

The amount of the emulsifier added in the first polymerization step is preferably 1 to 10 parts by mass, and more preferably 3 to 8.5 parts by mass per 100 parts by mass of monomer components.

The monomer component in the first polymerization step refers to the monomer (A-1) when the monomer (A-1) is used singly, and the total of the monomer (A-1) and the monomer (A-2) when the monomer (A-2) is used in combination.

The polymerization temperature in the first polymerization step is preferably 10 to 50°C, and more preferably 15 to 45°C. When the polymerization temperature is within the above-described range, generation of aggregates is unlikely to occur, and the film-forming property of the resulting chloroprene seed polymerization product latex and the strength of the molded product are easily maintained. When the polymerization temperature is within the above-described range, polymerization proceeds at a high rate, so that chloroprene polymer latex can be efficiently produced.

The polymerization initiator in the first polymerization step is not particularly limited, and a common radical polymerization initiator can be used.

Examples of the radical polymerization initiator include organic or inorganic peroxides such as benzoyl peroxide, potassium persulfate, ammonium persulfate, cumene hydroperoxide and tert-butyl hydroperoxide; and azo compounds such as azobisisobutyronitrile.

One of the polymerization initiators may be used singly, or two or more thereof may be used in combination.

In the first polymerization step, the amount of the polymerization initiator added is preferably 0.001 to 2.0 parts by mass, and more preferably 0.01 to 0.5 parts by mass per 100 parts by mass of monomer components.

In the first polymerization step, a cocatalyst may be used with the polymerization initiator. The cocatalyst is not particularly limited, and a common cocatalyst can be used.

Examples of the cocatalyst include anthraquinonesulfonates, potassium sulfite, sodium disulfite, sodium sulfite, tetraethylenepentamine, and N,N-dimethyl-p-toluidine.

One of the cocatalysts may be used singly, or two or more thereof may be used in combination.

When the cocatalyst is used in the first polymerization step, the amount of the cocatalyst added is preferably 0.0001 to 5.0 parts by mass, and more preferably 0.0005 to 0.50 parts by mass per 100 parts by mass of monomer components.

In the first polymerization step, a molecular weight modifier may be added in order to provide a chloroprene polymer having a desired molecular weight and a desired molecular weight distribution. The molecular weight modifier is not particularly limited, and a common chain transfer agent can be used.

Examples of the molecular weight modifier include xanthogen disulfides such as diisopropyl xanthogen disulfide, diethyl xanthogen sulfide, dicyclohexyl xanthogen disulfide, dilauryl xanthogen disulfide and dibenzyl xanthogen disulfide; and alkyl mercaptans such as n-dodecyl mercaptan, n-decyl mercaptan and octyl mercaptan, with alkyl mercaptans being preferable.

One of the molecular weight modifiers may be used singly, or two or more thereof may be used in combination.

When the molecular weight modifier is used in the first polymerization step, the amount of the molecular weight modifier added is preferably 0.01 to 0.1 parts by mass, and more preferably 0.03 to 0.08 parts by mass per 100 parts by mass of monomer components.

The conversion of the monomer in the first polymerization step is preferably 60 to 100%. The conversion of the monomer in the first polymerization step refers to the conversion of the monomer (A-1) when the monomer (A-1) is used singly, and the total conversion of the monomer (A-1) and the monomer (A-2) when the monomer (A-2) is used in combination. When the conversion is within the above-described range, chloroprene polymerized product latex having a solid content concentration described later can be easily obtained, and there is a tendency that generation of an odor due to remaining unreacted monomers (A-1) and/or (A-2) and deterioration of the film-forming property of the resulting chloroprene seed polymerization product latex and the strength of the molded product can be suppressed. In addition, it is possible to suppress sudden generation of heat which is caused by reaction of unreacted monomers (A-1) and/or (A-2) in the second polymerization step. Further, removal of unreacted volatile components (for example, unreacted monomers (A-1) and/or (A-2)) after the first polymerization step is not necessary, or light-load treatment is enough to perform the removal.

At the end of the polymerization reaction in the first polymerization step, a polymerization terminator may be added to stop the polymerization reaction when a predetermined polymerization ratio is reached, with the aim of providing a chloroprene polymer having a desired molecular weight and a desired molecular weight distribution.

The polymerization terminator is not particularly limited, and specific examples thereof include phenothiazine, para-tert-butylcatechol, hydroquinone, hydroquinone monomethyl ether, diethylhydroxylamine, 4-hydroxy-2,2,6,6-tetramethylpiperidin-1-oxyl free radicals.

One of the polymerization terminators may be used singly, or two or more thereof may be used in combination.

When the polymerization terminator is used in the first polymerization step, the amount of the polymerization terminator added is preferably 0.001 to 5 parts by mass, and more preferably 0.01 to 3 parts by mass per 100 parts by mass of monomer components.

A step of removing unreacted volatile components (for example, unreacted monomers (A-1) and/or (A-2)) may be included after the first polymerization step and before the second polymerization step.

The method for removing unreacted volatile components is not particularly limited as long as it is a known method. A steam stripping method is preferable from the viewpoint of being able to easily obtain chloroprene polymer latex having a solid content concentration described later.

The solid content concentration of the chloroprene polymer latex obtained in the first polymerization step is preferably 35 to 65 mass%. When the solid content concentration is within the above-described range, it is easier to maintain the stability of the colloid of the chloroprene polymer latex, and it is possible to minimize the possibility of the generation of an aggregate.

In the present invention, the solid content concentrations of chloroprene polymer latex and chloroprene seed polymerization product latex described later are measured by methods described in Examples below.

The content of tetrahydrofuran insoluble content (proportion of tetrahydrofuran insoluble content) in the chloroprene polymerized product latex is not particularly limited, and is preferably 10 to 99.9 mass%, more preferably 20 to 99 mass%, and further preferably 30 to 95 mass% per 100 mass% of the chloroprene polymer, from the viewpoint of easily preparing desired chloroprene seed polymerization product latex in the second polymerization step.

Here, the "tetrahydrofuran insoluble content" is a gel-like material that is insoluble in tetrahydrofuran, as well as a component that is hard and lacking in stretch property.

The content of the tetrahydrofuran insoluble content in the chloroprene polymer latex can be controlled by polymerization conditions such as the types of emulsifier and polymerization initiator, the types of molecular weight modifier and polymerization terminator used if necessary, the polymerization temperature and the conversion of the monomer in the first polymerization step.

In the present invention, the proportions of tetrahydrofuran insoluble content in chloroprene polymer latex and chloroprene seed polymerization product latex described later are measured by methods described in Examples below.

<Second polymerization step>

The second polymerization step is a step of performing emulsion seed polymerization of a monomer having a carbon-carbon double bond (hereinafter, also referred to simply as a "monomer (B)") with the chloroprene polymer obtained in the first polymerization step to synthesize a chloroprene seed polymerization product, thereby obtaining chloroprene seed polymerization product latex in which particles of the chloroprene seed polymerization product are dispersed in water.

The chloroprene polymer obtained in the first polymerization step has a carbon-carbon double bond derived from the monomer (A-1) or (A-2) in the main chain. Therefore, the monomer (B) has a carbon-carbon double bond, and the carbon-carbon double bond of the chloroprene polymer and the carbon-carbon double bond of the monomer (B) can react to perform seed polymerization.

In the polymer obtained by the seed polymerization, a layer (shell) of a polymer (for example, a polymer obtained by polymerizing the monomer (B)) covers core particles (for example, a chloroprene polymer) to form particles having a core/shell structure (seed polymerization product). The structure of the particles can be confirmed by, for example, scanning probe microscope (SPM) measurement.

(First Embodiment)

In the first embodiment of the present invention, emulsion seed polymerization of at least a (meth)acrylate monomer (B-1) which has an alkyl group having 1 to 4 carbon atoms and in which the number of carbon atoms in the straight chain of the alkyl group is 3 or less, as a monomer (B), is performed in the second polymerization step.

In the second polymerization step, the amount of the monomer (B-1) used is 3 to 20 parts by mass, preferably 4 to 15 parts by mass, and more preferably 5 to 10 parts by mass per 100 parts by mass of the total of the chloroprene polymer and the monomer (B-1). When the monomer (B-1) is used in an amount within the above-described range, a chloroprene seed polymerization product having monomer (B-1)-derived structural units in an amount meeting a range described later is easily obtained.

The conversion of the monomer (B-1) in the second polymerization step is preferably 70 to 100%, and more preferably 75 to 100%. When the conversion is within the above-described range, a chloroprene seed polymerization product having monomer (B-1)-derived structural units in an amount meeting a range described later is easily obtained, and chloroprene seed polymerization product latex having a solid content concentration described later can be easily obtained. Further, there is a tendency that generation of an odor due to remaining of unreacted monomers (B-1) and deterioration of the film-forming property of the resulting chloroprene seed polymerization product latex and the strength of the molded product can be suppressed. In addition, removal of unreacted components (for example, an unreacted chloroprene polymer and monomer (B-1)) after the second polymerization step is not necessary, or light-load treatment is enough to perform the removal.

The chloroprene seed polymerization product obtained in the embodiment contains monomer (B-1)-derived structural units in an amount of preferably 3 to 20 mass%, and more preferably 5 to 10 mass%.

It is considered that the chloroprene seed polymerization product containing the monomer (B-1) in an amount within the above-described range ensures maintenance of sufficient strength and flexibility of the resulting molded product because the properties of the chloroprene polymer of the core part of the core/shell structure are exhibited without being impaired by the shell part. The polymer latex has a sufficient film-forming property, and ensure excellent rubber elasticity of the resulting molded product because particles are sufficiently crosslinked due to the core/shell structure.

The (meth)acrylate is a compound represented by the general formula $CH_2=CR^1\text{-}CO\text{-}OR^2$, wherein $R^1$ represents a methyl group or a hydrogen atom, $R^2$ represents an alkyl group having 1 to 4 carbon atoms, and the number of carbon atoms in the straight chain of the alkyl group is 3 or less. As used herein, the "(meth)acrylate" means methacrylate and/or acrylate, and the "(meth)acryl" means methacryl and/or acryl.

Examples of the monomer (B-1) include methyl methacrylate, methyl acrylate, ethyl methacrylate, ethyl acrylate, n-propyl methacrylate, n-propyl acrylate, isopropyl methacrylate, isopropyl acrylate, isobutyl methacrylate, isobutyl acrylate, tert-butyl methacrylate, tert-butyl acrylate. Methyl methacrylate, methyl acrylate, ethyl methacrylate, ethyl acrylate, isobutyl methacrylate or tert-butyl methacrylate is preferable, and ethyl methacrylate, methyl methacrylate, isobutyl methacrylate or tert-butyl methacrylate is more preferable.

One of the monomers (B-1) may be used singly, or two or more thereof may be used in combination.

In the second polymerization step, monomers other than the monomer (B-1) may be copolymerized as long as the effect of the present invention is not impaired.

Examples of the monomer other than the monomer (B-1) include chloroprene, 2,3-dichloro-1,3-butadiene, vinyl chloride, styrene, acrylonitrile, acrylic acid, methacrylic acid, n-butyl methacrylate, n-butyl acrylate, and (meth)acrylates having an alkyl group having 5 to 12 carbon atoms, with chloroprene being preferable.

(Second Embodiment)

In the second embodiment of the present invention, emulsion seed polymerization of at least a monomer (B-2) whose homopolymer has a glass transition temperature (Tg) or melting point (Tm) of 30°C or higher, as a monomer (B), is performed in the second polymerization step.

The lower limit of Tg or Tm of the homopolymer of the monomer (B-2) is preferably 40°C or higher, more preferably 60°C or higher, and further preferably 80°C or higher. The upper limit of Tg or Tm of the homopolymer is not particularly limited, and is preferably 180°C or lower, more preferably 150°C or lower, and further preferably 135°C or lower.

In the second polymerization step, the amount of the monomer (B-2) used is 3 to 20 parts by mass, preferably 4 to 15 parts by mass, and more preferably 5 to 10 parts by mass per 100 parts by mass of the total of the chloroprene polymer and the monomer (B-2). When the monomer (B-2) is used in an amount meeting the above-described range, a chloroprene seed polymerization product having monomer (B-2)-derived structural units in an amount meeting a range described later is easily obtained.

The conversion of the monomer (B-2) in the second polymerization step is preferably 70 to 100%, and more preferably 75 to 100%. When the conversion is within the above-described range, a chloroprene seed polymerization product having monomer (B-2)-derived structural units in an amount meeting a range described later is easily obtained, and chloroprene seed polymerization product latex having a solid content concentration described later can be easily obtained. Further, there is a tendency that generation of an odor due to remaining of unreacted monomers (B-2) and deterioration of the film-forming property of the resulting chloroprene seed polymerization product latex and the strength of the molded product can be suppressed. In addition, removal of unreacted components (for example, an unreacted chloroprene polymer and monomer (B-2)) after the second polymerization step is not necessary, or light-load treatment is enough to perform the removal.

The chloroprene seed polymerization product obtained in the embodiment contains monomer (B-2)-derived structural units in an amount of preferably 3 to 20 mass%, and more preferably 5 to 10 mass%.

It is considered that the chloroprene seed polymerization product containing the monomer (B-2) in an amount within the above-described range ensures maintenance of sufficient strength and flexibility of the resulting molded product because the properties of the chloroprene polymer of the core part of the core/shell structure are exhibited without being impaired by the shell part. The polymer latex has a sufficient film-forming property, and ensure excellent rubber elasticity of the resulting molded product because particles are sufficiently crosslinked due to the core/shell structure.

Examples of the monomer (B-2) include 2,3-dichloro-1,3-butadiene (whose homopolymer has a Tm of 130°C), vinyl chloride (whose homopolymer has a Tg of 87°C), styrene (whose homopolymer has a Tg of 100°C), acrylonitrile (whose homopolymer has a Tg of 104°C), methyl methacrylate (whose homopolymer has a Tg of 90 to 100°C), ethyl methacrylate (whose homopolymer has a Tg of 65°C), isobutyl methacrylate (whose homopolymer has a Tg of 50 to 60°C), tert-butyl methacrylate (whose homopolymer has a Tg of 107°C), acrylic acid (whose homopolymer has a Tg of 106°C), and methacrylic acid (whose homopolymer has a Tg of 185°C). 2,3-dichloro-1,3-butadiene, vinyl chloride, styrene, acrylonitrile, methyl methacrylate, ethyl methacrylate, isobutyl methacrylate, tert-butyl methacrylate or methacrylic acid is preferable, 2,3-dichloro-1,3-butadiene, vinyl chloride, styrene, acrylonitrile, methyl methacrylate, isobutyl methacrylate, tert-butyl methacrylate or methacrylic acid is more preferable, and 2,3-dichloro-1,3-butadiene, ethyl methacrylate, methyl methacrylate, isobutyl methacrylate or tert-butyl methacrylate is further preferable.

One of the monomers (B-2) may be used singly, or two or more thereof may be used in combination.

Herein, Tg of the homopolymer is a temperature obtained by a method described in JIS K 7121: 2012.

Herein, Tm of the homopolymer is a temperature obtained by a method described in JIS K 0064: 1992.

In the second polymerization step, monomers other than the monomer (B-2) may be copolymerized as long as the effect of the present invention is not impaired.

Examples of the monomer other than the monomer (B-2) include chloroprene, methyl acrylate, ethyl acrylate, n-butyl methacrylate, and 2-ethylhexyl acrylate, with chloroprene being preferable.

The second polymerization step is a step of performing seed polymerization of the monomer (B) with the chloroprene polymer to synthesize a chloroprene seed polymerization product. This provides chloroprene seed polymerization product latex in which particles of the chloroprene seed polymerization product are dispersed in water.

Specifically, the chloroprene seed polymerization product can be synthesized by adding the monomer (B) and a polymerization initiator to the chloroprene polymer latex obtained in the first polymerization step, so that seed polymerization of the chloroprene polymer and the monomer (B) proceeds.

If necessary, an emulsifier and water may be added to the chloroprene polymer latex obtained in the first polymerization step.

Examples of the emulsifier in the second polymerization step include anionic emulsifiers, and nonionic emulsifiers.

Specific examples of the anionic emulsifier include alkali metal salts of disproportionated rosin acid; dodecylbenzenesulfonates such as sodium dodecylbenzenesulfonate and triethanolamine dodecylbenzenesulfonate; diphenylethersulfonates such as sodium diphenylethersulfonate and ammonium diphenylethersulfonate; naphthalenesulfonates such as sodium salts of β-naphthalenesulfonic acid formaldehyde condensates; and fatty acid alkali metal salts such as potassium laurate.

Specific examples of the nonionic emulsifier include partially saponified polyvinyl alcohol, polyoxyethylene nonylphenyl ether, polyoxyethylene octylphenyl ether, and polyoxyethylene lauryl ether.

The emulsifier in the second polymerization step is preferably an anionic emulsifier, and more preferably an alkali metal salt (sodium salt or potassium salt) of a fatty acid.

One of the emulsifiers may be used singly, or two or more thereof may be used in combination.

When the emulsifier is used in the second polymerization step, the amount of the emulsifier added is preferably 0.1 to 5 parts by mass, and more preferably 0.5 to 3.0 parts by mass per 100 parts by mass of monomer components.

The monomer component in the second polymerization step refers to the sum of an amount obtained by multiplying the amount of chloroprene polymer latex by a solid content ratio and the amount of the monomer (B) blended.

The polymerization temperature in the second polymerization step is preferably 10 to 50°C, and more preferably 15 to 45°C. When the polymerization temperature is within the above-described range, generation of aggregates is unlikely to occur, and the film-forming property of the resulting chloroprene seed polymerization product latex and the strength of the molded product are easily maintained. When the polymerization temperature is within the above-described range, polymerization proceeds at a high rate, so that chloroprene seed polymerization product latex can be efficiently produced.

The polymerization initiator in the second polymerization step is not particularly limited, and a common radical polymerization initiator can be used. Examples of the radical polymerization initiator include organic or inorganic peroxides such as benzoyl peroxide, potassium persulfate, ammonium persulfate, cumene hydroperoxide and tert-butyl hydroperoxide; and azo compounds such as azobisisobutyronitrile, with organic peroxides being preferable.

One of the polymerization initiators may be used singly, or two or more thereof may be used in combination.

In the second polymerization step, the amount of the polymerization initiator added is preferably 0.01 to 10 parts by mass, and more preferably 0.05 to 1 parts by mass per 100 parts by mass of monomer components.

In the second polymerization step, a cocatalyst may be used with the polymerization initiator. The cocatalyst is not particularly limited, and a common cocatalyst can be used.

Examples of the cocatalyst include anthraquinonesulfonates, potassium sulfite, sodium disulfite, sodium sulfite, tetraethylenepentamine, and N,N-dimethyl-p-toluidine.

One of the cocatalysts may be used singly, or two or more thereof may be used in combination.

When the cocatalyst is used in the second polymerization step, the amount of the cocatalyst added is preferably 0.0005 to 1.0 parts by mass, and more preferably 0.001 to 0.5 parts by mass per 100 parts by mass of monomer components.

In the second polymerization step, a molecular weight modifier may be added in order to provide a chloroprene seed polymerization product having a desired molecular weight and a desired molecular weight distribution. The molecular weight modifier is not particularly limited, and a common chain transfer agent can be used.

Examples of the molecular weight modifier include xanthogen disulfides such as diisopropyl xanthogen disulfide, diethyl xanthogen sulfide, dicyclohexyl xanthogen disulfide, dilauryl xanthogen disulfide and dibenzyl xanthogen disulfide; and alkyl mercaptans such as n-dodecyl mercaptan, n-decyl mercaptan and octyl mercaptan, with alkyl mercaptans being preferable.

One of the molecular weight modifiers may be used singly, or two or more thereof may be used in combination.

When the molecular weight modifier is used in the second polymerization step, the amount of the molecular weight modifier added is preferably 0.001 to 0.3 parts by mass, and more preferably 0.01 to 0.2 parts by mass per 100 parts by mass of monomer components.

At the end of the polymerization reaction in the second polymerization step, a polymerization terminator may be added to stop the polymerization reaction when a predetermined polymerization ratio is reached, with the aim of providing a chloroprene seed polymerization product having a desired molecular weight and a desired molecular weight distribution.

The polymerization terminator is not particularly limited, and specific examples thereof include phenothiazine, para-tert-butylcatechol, hydroquinone, hydroquinone monomethyl ether, diethylhydroxylamine, 4-hydroxy-2,2,6,6-tetramethylpiperidin-1-oxyl free radicals.

One of the polymerization terminators may be used singly, or two or more thereof may be used in combination.

When the polymerization terminator is used in the second polymerization step, the amount of the polymerization terminator added is preferably 0.005 to 0.15 parts by mass, and more preferably 0.01 to 0.1 parts by mass per 100 parts by mass of monomer components.

The solid content concentration of the chloroprene seed polymerization product latex obtained in the second polymerization step is preferably 35 to 65 mass%. When the solid content concentration is within the above-described range, it is easier to maintain the stability of the colloid of the chloroprene seed polymerization product latex, and it is possible to minimize the possibility of the generation of an aggregate.

The content of tetrahydrofuran insoluble content (proportion of tetrahydrofuran insoluble content) in the chloroprene seed polymerization product latex is preferably 50 to 99.9 mass%, more preferably 60 to 99 mass%, and further preferably 85 to 99 mass% per 100 mass% of the chloroprene seed polymerization product, from the viewpoint of improving the strength of the resulting molded product.

The content of tetrahydrofuran insoluble content in the chloroprene seed polymerization product latex can be controlled by polymerization conditions such as the types of emulsifier and polymerization initiator, the types of molecular weight modifier and polymerization terminator used if necessary, the polymerization temperature and the conversion of the monomer (B) in the second polymerization step. The content of tetrahydrofuran insoluble content in the chloroprene seed polymerization product latex can also be adjusted by the content of tetrahydrofuran insoluble content in chloroprene polymer latex used.

<Other steps>

To the chloroprene polymer latex obtained in the first polymerization step or the chloroprene seed polymerization product latex obtained in the second polymerization step, for example, a metal oxide, an antioxidant, a pH adjuster, a surfactant, a filler, a tackifier, a pigment, a colorant, a wetting agent, an anti-foaming agent and a thickener may be appropriately added as long as the purpose of the present invention is not hindered.

These additives may be directly added to the polymer latex. Those that are insoluble in water or destabilize the colloidal state of polymer latex may be added after being formed into an aqueous dispersion.

(Metal oxide)

Chloroprene and chloroprene polymers contain a halogen, and therefore, usually do not require a halogen donor during polymerization, but are preferably used together with a hydrogen halide acceptor such as a metal oxide.

Examples of the metal oxide include zinc oxide, lead oxide, trilead tetraoxide, with zinc oxide being preferable. One of the metal oxides may be used singly, or two or more thereof may be used in combination.

When the metal oxide is used, the amount of the metal oxide added is preferably 1 to 10 parts by mass, more preferably 2 to 8 parts by mass, and further preferably 3 to 6 parts by mass per 100 parts by mass of the solid content of polymer latex. Addition of the metal oxide in an amount meeting the above-described range may provide a composition having sufficient tensile strength and flexibility.

(Antioxidant)

Chloroprene-based polymers such as chloroprene polymers and chloroprene seed polymerization products generally tend to be easily degraded by oxygen, and blending of an antioxidant may enable suppression of the degradation by oxygen.

The antioxidant is preferably a hindered phenol-based antioxidant in applications where the appearance, in particular, the color tone, and sanitary properties are important, such as medical gloves. One of the antioxidants may be used singly, or two or more thereof may be used in combination.

When the antioxidant is used, the amount of the antioxidant added is preferably 0.1 to 5 parts by mass per 100 parts by mass of the solid content of polymer latex. When the amount of the antioxidant added is equal to or larger than the lower limit, the antioxidant effect is improved. When the amount of the antioxidant added is equal to or smaller than the upper limit, there is a tendency that crosslinking is promoted and the color tone is improved.

(pH adjuster)

As the pH adjuster, an alkali such as potassium hydroxide or ammonia; or a weak acid such as an amino acid (for example, glycine), acetic acid or citric acid is preferably used from the viewpoint of colloid stability and adjustment of the film thickness. Before use, the pH adjuster is preferably formed into an aqueous solution and diluted to the extent that a shock is not given to the colloid.

When the pH adjuster is used, the amount of the pH adjuster added is preferably 0.01 to 5 parts by mass, more preferably 0.5 to 4 parts by mass, and further preferably 1.5 to 3.5 parts by mass per 100 parts by mass of the solid content of polymer latex. When the amount of the pH adjuster is equal to or larger than the lower limit, it becomes easy to stabilize the colloid and adjust the thickness of the film. When the amount of the pH adjuster added is equal to or smaller than the upper limit, there is a tendency that sufficient coagulation is easily achieved and it is possible to suppress generation of aggregates in the formulation.

(Surfactant)

When a weak acid is added as the pH adjuster, a surfactant is preferably added to the polymer latex in advance from the viewpoint of colloid stability and the like.

Examples of the surfactant include anionic surfactants, nonionic surfactants, cationic surfactants, and amphoteric surfactants, with anionic surfactants being preferable. Examples of the anionic surfactant include alkyl sulfuric acid ester salts such as sodium lauryl sulfate and triethanolamine lauryl sulfate.

When the surfactant is used, the amount of the surfactant added is preferably 0.01 to 5 parts by mass, and more preferably 0.05 to 3 parts by mass per 100 parts by mass of the solid content of polymer latex.

<<Chloroprene seed polymerization product composition>>

A chloroprene seed polymerization product composition obtained by a production method according to an embodiment of the present invention (hereinafter, also referred to as "the present composition") includes at least chloroprene seed polymerization product latex synthesized through the first polymerization step and the second polymerization step.

The present composition does not contain a vulcanization accelerator normally used in formation of a molded product, but ensures that the resulting molded product has basic properties of rubber (for example, tensile strength and rubber elasticity) which are inherent in a chloroprene polymer.

Examples of the vulcanization accelerator include thiuram-based, dithiocarbamate-based and thiourea-based, guanidine-based vulcanization accelerator which are commonly used for vulcanization of chloroprene polymer latex. Examples of the thiuram-based vulcanization accelerator include tetraethylthiuram disulfide and tetrabutylthiuram disulfide. Examples of the dithiocarbamate-based vulcanization accelerator include sodium dibutylthiodicarbamate, zinc dibutylthiodicarbamate, and zinc diethylthiodicarbamate. Examples of the thiourea-based vulcanization accelerator include ethylene thiourea, diethyl thiourea, trimethyl thiourea, and N,N'-diphenyl thiourea, with N,N'-diphenyl thiourea being particularly preferable. Examples of the guanidine-based vulcanization accelerator include diphenyl guanidine, and di-ortho-tolylguanidine.

Since a vulcanization accelerator causes type IV hypersensitivity, the present composition is preferably free of a vulcanization accelerator from the viewpoint of ensuring that relevant medical gloves can be safely used without worrying about allergies.

Molded products obtained from the present composition are preferably used for rubber dipped products such as gloves, blood-pressure meter bladders and rubber threads, in particular, medical disposable gloves such as surgical gloves.

<<Method for producing rubber dipped product>>

A rubber dipped product can be prepared by a known method. Specifically, with the present composition, the steps of dipping/solidification, leaching (removal of water-soluble impurities), drying, and crosslinking are carried out in this order to obtain a molded product (rubber dipped product) having a desired shape.

In the crosslinking step, a crosslinking temperature higher than the crosslinking temperature for natural rubber tends to be required for obtaining a desired degree of crosslinking. The crosslinking temperature is normally 120 to 140°C, and the crosslinking time is 30 minutes to 2 hours. Before crosslinking, rough drying at a relatively low temperature of 70 to 100°C may be required in order to avoid problems of the appearance of the product, such as blisters or pinholes. It is preferable that the crosslinking be sufficiently performed as long as, for example, tensile strength and elongation at rupture are not deteriorated.

The tensile strength (tensile strength at break; hereinafter also referred to as "Tb") of a molded product obtained from the present composition is preferably 16 MPa or more, and more preferably 17 MPa or more, further preferably 18 MPa or more, and particularly preferably 20 MPa or more from the viewpoint of use as medical gloves.

The rubber elasticity (M100 retention rate) of a molded product obtained from the present composition is 73% or more, more preferably 75% or more, and further preferably 78% or more. When the M100 retention rate is within the above-described range, it can be said that the molded product has very good rubber elasticity.

The tensile strength (for example, tensile strength at break) and the rubber elasticity (for example, M100 retention rate) of the molded product can be measured using a film-shaped molded product prepared by the above-described method for producing a rubber dipped product. Specific measurement methods are described in Examples below.

**Examples**

Hereinafter, examples of the form of the present invention will be described in detail with reference to Examples, but the present invention is not intended to be limited to Examples below.

[Example 1]

(1) Preparation of chloroprene polymer latex

A reaction vessel having an internal volume of 5 L was charged with 1555 g of chloroprene, 145 g of 2,3-dichloro-1,3-butadiene (8.5 mass% per 100 mass% of the total of chloroprene and 2,3-dichloro-1,3-butadiene), 1367 g of pure water, 73 g of disproportionated rosin, 20 g of potassium hydroxide, 18 g of sodium hydroxide, 1.0 g or n-dodecyl mercaptan, 4.8 g of potassium sulfite and 9.0 g of a sodium salt of a β-naphthalenesulfonic acid formalin condensate, which were allowed to emulsify.
To the obtained emulsion was added 0.3 g of potassium persulfate as a polymerization initiator to perform polymerization at 40°C in a nitrogen atmosphere. Once a desired polymerization ratio was reached, 18.8 g of a milky liquid of phenothiazine (containing 0.3 g of phenothiazine) was immediately added to stop the polymerization. The solid content concentration of the obtained product was 48 mass%, and the conversion of monomers (total conversion of chloroprene and 2,3-dichloro-1,3-butadiene) was 88%. Subsequently, unreacted chloroprene was removed by steam stripping to obtain chloroprene polymer latex [1] (solid content concentration: 50%, proportion of tetrahydrofuran insoluble content: 45%).

(2) Preparation of chloroprene seed polymerization product latex

A reaction vessel having an internal volume of 3 L was charged with 1500 g of the chloroprene polymer latex [1] obtained in (1), 26.5 g of glycine, 84 g of ethyl methacrylate (10 parts by mass per 100 parts by mass of the total of chloroprene and ethyl methacrylate), 1.85 g of potassium sulfite, 126 g of pure water, 5.6 g of sodium lauryl sulfate and 0.126 g of n-dodecyl mercaptan, which were allowed to emulsify.
To the obtained emulsion was added 10.8 g of a 70 mass% aqueous solution of t-butyl hydroperoxide as a polymerization initiator to perform polymerization at 40°C in a nitrogen gas atmosphere. After the reaction proceeded for about 6 hours, 0.92 g of a 10 mass% aqueous solution of 4-hydroxy-2,2,6,6-tetramethylpiperidin-1-oxyl free radicals was added to stop the polymerization, thereby obtaining chloroprene seed polymerization product latex (solid content concentration: 50.1 mass%, proportion of tetrahydrofuran insoluble content: 90.0%). The conversion of the ethyl methacrylate here was 95.5%.

[Examples 2 to 11 and Comparative Examples 1 to 3]

(1) Preparation of chloroprene polymer latex

The same procedure as in Example 1, (1) was carried out to obtain chloroprene polymer latex [1].

(2) Preparation of chloroprene seed polymerization product latex

Except that the types and amounts of monomers subjected to seed polymerization with the chloroprene polymer were changed as shown in Table 1, the same procedure as in Example 1, (2) was carried out to obtain chloroprene seed polymerization product latex. Table 1 shows the solid content concentrations of the obtained chloroprene seed polymerization product latex.
In Tables 1 and 2, EMA denotes ethyl methacrylate (Tg of homopolymer: 65°C), MMA denotes methyl methacrylate (Tg of homopolymer: 90 to 100°C), i-BMA denotes isobutyl methacrylate (Tg of homopolymer: 50 to 60°C), t-BMA denotes tert-butyl methacrylate (Tg of homopolymer: 107°C), DCB denotes 2,3-dichloro-1,3-butadiene (Tm of homopolymer: 130°C), and n-BMA denotes n-butyl methacrylate (Tg of homopolymer: 20°C).

[Example 12]

(1) Preparation of chloroprene polymer latex

Except that a molecular weight modifier was not added, the same procedure as in Example 1, (1) was carried out to obtain chloroprene polymer latex [2] (solid content concentration: 50 mass%, conversion of monomer: 88%, proportion of tetrahydrofuran insoluble content: 80%).

(2) Preparation of chloroprene seed polymerization product latex

Except that the chloroprene polymer was replaced by chloroprene polymer latex [2], the same procedure as in Example 6, (2) was carried out to obtain chloroprene seed polymerization product latex. Table 2 shows the solid content concentrations of the obtained chloroprene seed polymerization product latex.

[Example 13]

(1) Preparation of chloroprene polymer latex

The same procedure as in Example 12, (1) was carried out to obtain chloroprene polymer latex [2].

(2) Preparation of chloroprene seed polymerization product latex

Except that the types and amounts of monomers subjected to seed polymerization with the chloroprene polymer were changed as shown in Table 2, the same procedure as in Example 12, (2) was carried out to obtain chloroprene seed polymerization product latex. Table 2 shows the solid content concentrations of the obtained chloroprene seed polymerization product latex.

[Comparative Example 4]

(1) Preparation of chloroprene polymer latex

The same procedure as in Example 1, (1) was carried out to obtain chloroprene polymer latex [1].

[Comparative Example 5]

(1) Preparation of chloroprene polymer latex

The same procedure as in Example 12, (1) was carried out to obtain chloroprene polymer latex [2].

<Evaluation of polymer latex>

The conversion and the proportion of tetrahydrofuran insoluble content of the polymer latex (chloroprene polymer latex or chloroprene seed polymerization product latex) obtained in each of Examples and Comparative Examples were evaluated by the following methods.

·Evaluation of conversion

The polymer latex after the polymerization was collected, and the monomer conversion was calculated from the solid content after drying at 141°C for 30 minutes. The solid content concentration and the monomer conversion were determined by the following equation, and the amount of the polymer produced was determined by subtracting a solid content excluding the polymer from the solid content concentration. Tables 1 and 2 show the results.

```
Solid content concentration [mass%]

= [(weight after drying at 141°C for 30

minutes)/(weight of latex before drying)] × 100
```

$$\text{Monomer conversion [\%]} = [(\text{amount of polymer produced/amount of all monomers charged})] \times 100$$

However, if the content of the shell in the seed polymerization product is smaller than 5 parts by mass per 100 parts by mass of the seed polymerization product in seed polymerization of the chloroprene polymer, it may be impossible to calculate an accurate value because the change in solid content decreases, so that a deviation of the value has a significant influence. For this reason, in the case where the amount of the monomer (B) used was 5 parts by mass or less per 100 parts by mass of the total of the chloroprene polymer and the monomer (B) (Examples 2 to 5) in preparation of chloroprene seed polymerization product latex, evaluation was not conducted, and "N/A" was written.

·Evaluation of proportion of tetrahydrofuran insoluble content (gel amount)

About 0.5 g of polymer latex was added dropwise to 100 ml of THF (tetrahydrofuran), the mixture was shaken overnight, a dissolved phase of the supernatant was then separated with a centrifuge, THF was evaporated to dryness at 100°C over 1 hour, and a dissolved content amount was calculated, and subtracted from the amount of the used polymer latex to calculate a proportion of tetrahydrofuran insoluble content [mass%]. Tables 1 and 2 show the results.

(Proportion of tetrahydrofuran insoluble content [mass%] = (mass after evaporation to dryness) ÷ (mass of polymer latex) × 100

<Evaluation of physical properties after crosslinking>

(1) Preparation of chloroprene seed polymerization product

To 100 parts by mass of a solid content of the chloroprene seed polymerization product latex or chloroprene polymer latex obtained in each of Examples and Comparative Examples, 3 parts by mass (on a solid content basis) of potassium hydroxide and 5 parts by mass (on a solid content basis) of zinc oxide were added. The resulting formulation was put in a stirring bath with a three-one-motor, and mixed and homogenized with stirring for 5 minutes or more to prepare a chloroprene seed polymerization product composition. The potassium hydroxide was added as a 3 mass% aqueous solution, and the zinc oxide was added as a 50 mass% aqueous dispersion.

(2) Preparation of test piece

With a 30 mass% calcium nitrate aqueous solution as a coagulation liquid, a dipped film was prepared from the obtained chloroprene seed polymerization product composition, and then leached in hot water at 50°C for 2 minutes to remove a water-soluble components. Subsequently, the film was dried at 70°C for 30 minutes.
The obtained film was vulcanized by conventional oven vulcanization, where the film was heated at 130°C for 30 minutes. The vulcanized sheet was appropriately cut on the basis of evaluation items to obtain test pieces having a thickness of 0.15 to 0.25 mm. With the test pieces, the tensile strength and the M100 retention rate were evaluated by the following methods.

·Evaluation of tensile strength (tensile strength at break)

With the test pieces, the tensile strength at break of the composition was measured according to JIS K 6251: 2017. For the dimension of the test piece, a No. 6 dumbbell shape was used. By the present test, the tensile strength at room temperature was measured. Tables 1 and 2 show the results.

· Evaluation of rubber elasticity (M100 retention rate)

With the test pieces, the modulus of the composition was measured according to JIS K 6251: 2017. For the dimension of the test piece, a No. 6 dumbbell shape was used. The dumbbell was pulled at 200 mm/min, and the pulling was stopped at the point of elongation by 100%. By the present test, the modulus (M100) at elongation by 100% was measured immediately after elongation by 100% and after 2 minutes, and the retention after 2 minutes was calculated by the following equation. Tables 1 and 2 show the results.

M100 retention rate [%]

= (M100 after 2 minutes)/(M100 immediately after elongation) × 100

[Table 1]

M100 retention rate [%]

Table 1

| | | | Example 1 Seed polymerization product | Example 2 Seed polymerization product | Example 3 Seed polymerization d product | Example 4 Seed polymerization product | Example 5 Seed polymerization product | Example 6 Seed polymerization product | Example 7 Seed polymerization product |
|---|---|---|---|---|---|---|---|---|---|
| Polymer | | Chloroprene polymer [1] | 90 | 95 | 97 | 95 | 95 | 97 | 97 |
| | | Chloroprene polymer [2] | 0 | 0 | 0 | 0 | 0 | 0 | 0 |
| Second polymerization condition (parts by mass) | Monomer (B) | EMA | 10 | 5 | 3 | 0 | 0 | 0 | 0 |
| | | MMA | 0 | 0 | 0 | 5 | 0 | 3 | 0 |
| | | i-BMA | 0 | 0 | 0 | 0 | 5 | 0 | 0 |
| | | n-BMA | 0 | 0 | 0 | 0 | 0 | 0 | 0 |
| | | t-BMA | 0 | 0 | 0 | 0 | 0 | 0 | 3 |
| | | DCB | 0 | 0 | 0 | 0 | 0 | 0 | 0 |
| | | Monomer (B) conversion [%] | 95.5 | N/A | N/A | N/A | N/A | N/A | N/A |
| | | Solid content [%] | 50.1 | 50.6 | 50.9 | 50.6 | 50.3 | 49.7 | 48.6 |
| Physical property | | Tetrahydrofuran insoluble content [%] | 90.0 | 90.3 | 89.1 | 89.2 | 88.5 | 81.0 | 91.3 |
| | | Tb [MPa] | 21.0 | 18.2 | 16.6 | 20.8 | 16.1 | 20.9 | 21.4 |
| | | M100 retention rate [%] | 73.1 | 78.6 | 75.0 | 80.6 | 75.6 | 74.3 | 74.2 |

| | | | Example 8 | Example 9 | Example 10 | Example 11 | Comparative Example 1 | Comparative Example 2 | Comparative Example 3 |
|---|---|---|---|---|---|---|---|---|---|
| Polymer | | | Seed polymerization product | Seed polymerization product | Seed polymerization product | Seed polymerization product | Seed polymerization product | Seed polymerization product | Seed polymerization product |
| Second polymerization condition (parts by mass) | Chloroprene polymer [1] | | 95 | 93 | 95 | 90 | 70 | 70 | 99 |
| | Chloroprene polymer [2] | | 0 | 0 | 0 | 0 | 0 | 0 | 0 |
| | Monomer (B) | EMA | 0 | 0 | 0 | 0 | 0 | 30 | 1 |
| | | MMA | 0 | 0 | 0 | 0 | 0 | 0 | 0 |
| | | i-BMA | 0 | 0 | 0 | 0 | 0 | 0 | 0 |
| | | n-BMA | 0 | 0 | 0 | 0 | 30 | 0 | 0 |
| | | t-BMA | 5 | 7 | 0 | 0 | 0 | 0 | 0 |
| | | DCB | 0 | 0 | 5 | 10 | 0 | 0 | 0 |
| Physical property | Monomer (B) conversion [%] | | N/A | N/A | N/A | 93.4 | 97.8 | 97.0 | N/A |
| | Solid content [%] | | 48.5 | 48.5 | 48.5 | 48.3 | 47.0 | 46.9 | 51.0 |
| | Tetrahydrofuran insoluble content [%] | | 90.8 | 90.8 | 87.2 | 91.4 | 88.3 | 85.6 | 69.2 |
| | Tb [MPa] | | 19.8 | 20.0 | 21.2 | 20.6 | 17.7 | Film production impossible | 17.2 |
| | M100 retention rate [%] | | 76.8 | 77.9 | 73.6 | 75.1 | 60.2 | | 65.9 |

EP 4 775 606 A1

16

[Table 2]

Table 2

|  |  | | Example 12 | Example 13 | Comparative Example 4 | Comparative Example 5 |
|---|---|---|---|---|---|---|
| Polymer | | | Seed polymerization product | Seed polymerization product | Chloroprene polymer [1] alone | Chloroprene polymer [2] alone |
| Second polymerization condition (parts by mass) | Chloroprene polymer [1] | | 0 | 0 | - | - |
| | Chloroprene polymer [2] | | 97 | 95 | - | - |
| | Monomer (B) | EMA | 0 | 0 | - | - |
| | | MMA | 3 | 0 | - | - |
| | | i-BMA | 0 | 0 | - | - |
| | | n-BMA | 0 | 0 | - | - |
| | | t-BMA | 0 | 5 | - | - |
| | | DCB | 0 | 0 | - | - |
| Physical property | Monomer (B) conversion [%] | | 99.9 | 98.3 | - | - |
| | Solid content [%] | | 48.7 | 49.0 | 50.0 | 50.0 |
| | Tetrahydrofuran insoluble content [%] | | 93.2 | 93.0 | 45 | 80 |
| | Tb [MPa] | | 19.4 | 19.7 | 18.7 | 18.4 |
| | M100 retention rate [%] | | 82.4 | 81.4 | 67.9 | 70.5 |

As shown in Tables 1 and 2, molded products obtained from the compositions used in Examples 1 to 13 have high tensile strength (Tb) (16 MPa or more) and a high M100 retention rate (73% or more). This indicates that the resulting molded products are excellent in strength and rubber elasticity. In Comparative Example 1, where n-butyl methacrylate was used as a monomer subjected to seed polymerization, the tensile strength increased, but the rubber elasticity was lost and the M100 retention rate considerably decreased. In Comparative Example 2, where ethyl methacrylate was introduced at 30 parts by mass per 100 parts by mass of the seed polymerization product, it was not possible to form a film. In Comparative Example 3, where ethyl methacrylate was polymerized at only 1 part by mass per 100 parts by mass of the seed polymerizationd product, strength originated in ethyl methacrylate was not exhibited, rubber elasticity was lost, and the M100 retention rate decreased. In both of Comparative Examples 4 and 5, where chloroprene polymer latex obtained in the first polymerization step was used, tensile strength originated in chloroprene was sufficient, but the M100 retention rate was low because crosslinking did not sufficiently proceed.

**Claims**

1.  A method for producing a chloroprene seed polymerization product composition, comprising a first polymerization step and a second polymerization step,

    the first polymerization step being a step of performing emulsion radical polymerization of at least a chloroprene monomer to obtain a chloroprene polymer,
    the second polymerization step being a step of performing emulsion seed polymerization of at least a monomer (B-2), whose homopolymer has a glass transition temperature or melting point of 30°C or higher, with the chloroprene polymer, at 3 to 20 parts by mass per 100 parts by mass of a total of the chloroprene polymer and the monomer (B-2).

2. A method for producing a chloroprene seed polymerization product composition, comprising a first polymerization step and a second polymerization step,

   the first polymerization step being a step of performing emulsion radical polymerization of at least a chloroprene monomer to obtain a chloroprene polymer,
   the second polymerization step being a step of performing emulsion seed polymerization of at least a (meth) acrylate monomer (B-1), which has an alkyl group having 1 to 4 carbon atoms and in which the number of carbon atoms in a straight chain of the alkyl group is 3 or less, with the chloroprene polymer, at 3 to 20 parts by mass per 100 parts by mass of a total of the chloroprene polymer and the monomer (B-1).

3. The method for producing a chloroprene seed polymerization product composition according to claim 1, wherein the monomer (B-2) is ethyl methacrylate, methyl methacrylate, isobutyl methacrylate, tert-butyl methacrylate, or 2,3-dichloro-1,3-butadiene.

4. The method for producing a chloroprene seed polymerization product composition according to claim 2, wherein the monomer (B-1) is ethyl methacrylate, methyl methacrylate, isobutyl methacrylate, or tert-butyl methacrylate.

5. A method for producing a rubber dipped product, comprising using a chloroprene seed polymerization product composition obtained by the production method according to any one of claims 1 to 4.

6. The method for producing a rubber dipped product according to claim 5, wherein the rubber dipped product is gloves.

7. The method for producing a rubber dipped product according to claim 6, wherein the gloves are medical disposable gloves.

## INTERNATIONAL SEARCH REPORT

| | International application No. |
|---|---|
| | **PCT/JP2024/031979** |

**A. CLASSIFICATION OF SUBJECT MATTER**

*C08F 279/02*(2006.01)i; *C08F 2/22*(2006.01)i; *C08J 5/02*(2006.01)i
FI: C08F279/02; C08J5/02 CEQ; C08F2/22

According to International Patent Classification (IPC) or to both national classification and IPC

**B. FIELDS SEARCHED**

Minimum documentation searched (classification system followed by classification symbols)

C08F279/02; C08F2/22; C08J5/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-043271 A (SHOWA DENKO K.K.) 15 March 2022 (2022-03-15) | 1 |
| | claims, paragraphs [0079]-[0080], [0083]-[0084], [0092] | |
| Y | claims, paragraphs [0079]-[0080], [0083]-[0084], [0092] | 5-7 |
| A | entire text | 2-4 |
| X | WO 2020/196919 A1 (KANEKA CORP.) 01 October 2020 (2020-10-01) | 1-4 |
| | claims, paragraphs [0017]-[0018], [0420]-[0421], [0442]-[0443] | |
| Y | claims, paragraphs [0017]-[0018], [0420]-[0421], [0442]-[0443] | 5-7 |
| Y | WO 2012/137663 A1 (DENKI KAGAKU KOGYO KK) 11 October 2012 (2012-10-11) | 5-7 |
| | claims | |
| A | entire text | 1-4 |
| A | WO 2020/189456 A1 (DENKA CO., LTD.) 24 September 2020 (2020-09-24) | 1-7 |
| | entire text | |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/031979** |

### C. DOCUMENTS CONSIDERED TO BE RELEVANT

| Category* | Citation of document, with indication, where appropriate, of the relevant passages | Relevant to claim No. |
| --- | --- | --- |
| A | JP 07-324148 A (KANEGAFUCHI CHEM IND CO., LTD.) 12 December 1995 (1995-12-12) entire text | 1-7 |
| A | JP 2005-120382 A (DENKI KAGAKU KOGYO KK) 12 May 2005 (2005-05-12) entire text | 1-7 |

Form PCT/ISA/210 (second sheet) (July 2022)

## INTERNATIONAL SEARCH REPORT
### Information on patent family members

International application No.

**PCT/JP2024/031979**

| Patent document cited in search report | | | Publication date (day/month/year) | Patent family member(s) | | | Publication date (day/month/year) |
|---|---|---|---|---|---|---|---|
| JP | 2022-043271 | A | 15 March 2022 | US | 2019/0169344 | A1 | |
| | | | | claims, paragraphs [0112]-[0114], [0117]-[0121], [0139] | | | |
| | | | | CN | 109563216 | A | |
| WO | 2020/196919 | A1 | 01 October 2020 | US | 2022/0010124 | A1 | |
| | | | | claims, paragraphs [0023], [0024], [0524]-[0526], [0548]-[0549] | | | |
| | | | | EP | 3950749 | A1 | |
| | | | | CN | 113677720 | A | |
| WO | 2012/137663 | A1 | 11 October 2012 | US | 2014/0011936 | A1 | |
| | | | | claims | | | |
| WO | 2020/189456 | A1 | 24 September 2020 | EP | 3940002 | A1 | |
| | | | | CN | 113474376 | A | |
| JP | 07-324148 | A | 12 December 1995 | (Family: none) | | | |
| JP | 2005-120382 | A | 12 May 2005 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007106994 A
- JP 2009501833 A

- WO 2016166998 A